# EUROPÄISCHE PATENTSCHRIFT

(11) **EP 1 150 041 B1**
(45) Veröffentlichungstag und Bekanntmachung des Hinweises auf die Patenterteilung: **15.06.2005**
(21) Anmeldenummer: 01108983.6
(22) Anmeldetag: 11.04.2001
(51) Int. Cl.: F16H 61/02, F16H 59/14

(54) **Anordnung zum drehmomentfreien Schalten eines Getriebes**
Arrangement for torque-free gear shifting
Dispositif pour changer de vitesse sans moment de rotation

(30) Priorität: 27.04.2000 DE 10020643
(43) Veröffentlichungstag der Anmeldung: 31.10.2001
(73) Patentinhaber: DaimlerChrysler AG, 70567 Stuttgart (DE)
(72) Erfinder: Fischer, Roland, Prof. Dr., 61130 Nidderau (DE); Hillenbrand, Werner, Dipl.-Ing., 72639 Neuffen (DE); Hoffmann, Klaus, Dipl.-Phys., 64342 Seeheim-Jugenheim (DE); Liu, Xiaoyi, Dr., 71364 Winnenden (DE); Schmalz, Hilmar, Dipl.-Ing., 71263 Weil der Stadt (DE); Seyer, Reinhard, Dipl.-Ing., 63110 Rodgau (DE)

(56) Entgegenhaltungen:
- EP-A- 0 532 365
- EP-A- 0 737 598
- WO-A-88/00690
- DE-A- 3 635 299
- JP-A- 59 046 527
- JP-A- 61 008 639
- US-A- 4 798 105
- US-A- 5 902 212

## Beschreibung

Die Erfindung betrifft ein Erzeugnis gemäß dem Oberbegriff des unabhängigen Anspruchs.

Für den Gangwechsel in teil- oder vollautomatisierten Schaltgetrieben werden bisher die Motordrehzahl, die Vorgelegewellendrehzahl und die Abtriebswellendrehzahl sowie das berechnete Motordrehmoment als Regelgrößen verwendet. Bei Getrieben, deren Kupplung beim Gangwechsel nicht geöffnet wird, ist es aus Komfortgründen sehr wichtig, daß beim Schalten aus einem Gang in die Neutralstellung das Getriebe drehmomentfrei ist. Ansonsten kann ein unakzeptabler Drehmomentstoß durch das Lösen einer Vorspannung von Gangrad und Getriebehauptwelle auftreten. Die Erkennung des Drehmoment-Nulldurchganges mit Hilfe eines berechneten Motordrehmomentverlaufs ist hier zu ungenau. Eine Sensierung des tatsächlich anliegenden Drehmoments ist deshalb erforderlich.

Aus der EP 0 532 365 A ist ein gattungsgemäßes Steuersystem für ein Automatikgetriebe bekannt, welche einen drehmomentfreien Gangwechsel zum Wechsel des Übersetzungsverhältnisses der Drehzahlen von eingangsseitiger Antriebswelle und ausgangsseitiger Abtriebswelle ermöglicht. Zur Erfassung des übertragenen Drehmoments ist ein Drehmomentsensor vorgesehen, welcher mit einer Getriebesteuereinheit verbunden ist.

Aus der WO 88 00690 A ist eine Vorrichtung zum berührungsfreien messen eines mechanischen Drehmoments bekannt. Diese Vorrichtung umfasst zwei Erregerspulen, deren Induktivität von einer Sensorspule erfasst und zur Ermittlung des Drehmoments einer Welle herangezogen wird.

Erfindungsgemäße Aufgabe ist daher ein drehmomentgesteuertes Schaltgetriebe vorzustellen, bei dem das tatsächlich an der Getriebehauptwelle anliegende Drehmoment als zusätzliche Regelgröße für den Schaltvorgang erfaßt wird und welches diagnosefähig ist.

Erfindungsgemäß wird diese Aufgabe gelöst durch die Merkmale des unabhängigen Anspruchs. Eine vorteilhafte Ausführungsform ist in Unteranspruch 2 enthalten.

Die Lösung gelingt mit einem drehmomentgesteuerten Schaltgetriebe, bei dem mittels eines berührungslosen Drehmomentsensors das an der Getriebehauptwelle anliegende Drehmoment gemessen wird und der Drehmomentsensor ein Meßsignal liefert, das als Maß für den richtigen Schaltzeitpunkt einer Getriebesteuerung zugeführt wird. Bei einem Kraftfahrzeug mit einem Verbrennungsmotor wird die Antriebsleistung des Verbrennungsmotors auf die Kurbelwelle übertragen. Eine Kupplung überträgt das an der Kurbelwelle anliegende Drehmoment auf die Getriebehauptwelle und schließlich unter Zwischenschaltung eines Getriebes auf eine Abtriebswelle und über ein Differentialgetriebe schließlich auf die Antriebsräder des Kraftfahrzeuges. Der Drehmomentsensor erfaßt das an der Getriebhauptwelle tatsächlich anliegende Drehmoment und speist das diesem Drehmoment zugehörige Meßsignal in eine Getriebesteuerung ein. Weiterhin ist die Getriebsteuerung mit einem Drehzahlsensor zur Erfassung der Motordrehzahl, einem Geschwindigkeitssensor zur Erfassung der Fahrzeuggeschwindigkeit und einem Gaspedalsensor zur Erfassung der Stellung des Gaspedals verbunden. Die Kupplung und das Schaltgetriebe werden mittels angetriebenen Stellgliedern, die von der Getriebesteuerung angesteuert werden, betätigt. Geschaltet wird das Getriebe vorteilhafter Weise in Zeitpunkten, in denen an der Getriebehauptwelle kein Drehmoment anliegt. Der von dem Drehmomentsensor gemessene Nulldurchgang des Drehmomentverlaufs an der Getriebehauptwelle wird hierbei als Maß für den richtigen Schaltzeitpunkt gewählt.

Die Drehmomentmessung selbst nutzt den magnetoelastischen Effekt an tordierten rotierenden Wellen. Bei der Torsion einer Welle in Folge eines anliegenden Drehmomentes bilden sich auf der Oberfläche einer tordierten Welle Bereiche mit Druckspannung und Bereiche mit Zugspannung aus. Die Richtungen von Zug und Druck stehen aufeinander senkrecht. Die magnetischen Eigenschaften von ferromagnetischen Materialien wie Werkzeugstahl werden unter dem Einfluß mechanischer Zugund Druckspannungen geändert. Diese Änderungen der magnetischen Eigenschaften werden mittels eines Drehmomentsensors aus mindestens einer Erregerspule und mindestens zwei Sensorspulen gemessen. Hierzu wird der Sensor in der Nähe der Wellenoberfläche angebracht und mit der Erregerspule ein magnetisches Wechselfeld erzeugt dessen Magnetfeldlinien in die Welle eindringen. Durch den magnetoelastischen Effekt hat das durch die Erregerspule hervorgerufene Magnetfeld in der tordierten Welle in Druckspannungsrichtung und in Zugspannungsrichtung betragsmäßig und richtungsmäßig unterschiedliche Anteile. Eine der Sensorspulen des Drehmomentsensors erfasst das in der Welle induzierte Magnetfeld in Druckspannungsrichtung, eine andere Sensorspule des Drehmomentsensors erfaßt das in der Welle induzierte Magnetfeld in Zugspannungsrichtung. Die beiden Sensorspulen respektive deren Meßsignale für Druckspannungsrichtung und Zugspannungsrichtung sind in Differenzschaltung geschaltet. Der Drehmomentsensor liefert also ein Differenzsignal für Druckspannungsrichtung und Zugspannungsrichtung. Ist die Welle drehmomentfrei, sind also keine Druckspannungen und Zugspannungen in der Welle vorhanden, ist auch kein magnetoelastischer Effect in der Welle vorhanden und die Magnetfeldanteile in Druckspannungsrichtung und Zugspannungsrichtung sind betragsmäßig gleich und das Differenzsignal des Drehmomentsensor zeigt einen Nulldurchgang. Der Nulldurchgang des Differenzsignals der Sensorspulen des Drehmomentsensors zeigt damit einendrehmomentfreien Zustand der Welle an und ist deshalb ein Maß zur Anzeige des geeigneten Schaltzeitpunktes. Das Differenzsignal wird deshalb als Steuergröße für die Getriebesteuerung genommen.

Das erfindungsgemäße drehmomentgesteuerte Getriebe erlaubt ein ruckfreies Schalten von teil- oder vollautomatisierten Getrieben. Die mechanischen Bauteile werden damit geschont, deren Verschleiß verringert und dadurch die Lebensdauer von insbesondere Getriebe und Kupplung erhöht.

Die Drehmomenterkennung respektive die Erkennung des drehmomentfreien Zustandes der Getriebehauptwelle bietet erstmals die Möglichkeit einen Gangwechsel drehmomentfrei und damit komfortabel auszuführen, ohne hierfür die Kupplung zu öffnen. Damit ist das erfindungsgemäße drehmomentgesteuerte Getriebe besonders geeignet für alle Schaltgetriebe mit automatisierter Schaltung, bei denen beim Gangwechsel die Kupplung geschlossen bleibt.

Aber auch bei Getrieben, bei denen beim Gangwechsel die Kupplung geöffnet werden soll, ist das drehmomentgesteuerte Getriebe von Vorteil. Die Erkennung des drehmomentfreien Zustandes ist auch bei diesen Getrieben wichtig, da zum einen das Auskuppeln nur ruckfrei verläuft, wenn das vor dem Auskuppeln anliegende Drehmoment nahe Null ist, und um zum weiteren zuverlässig erkennen zu können, ob die Kupplung zuverlässig geöffnet wird und ob die Kupplung die Kurbelwelle vollständig von der Getriebehauptwelle getrennt hat. Auch hier erlaubt das erfindungsgemäße Schaltgetriebe die Erkennung des richtigen Schaltzeitpunktes. Insbesondere kann ein Kupplungsfehler erkannt werden, wenn trotz betätigter Kupplung an der Getriebehauptwelle kein drehmomentfreier Zustand eintritt. Das System Kupplung-Getriebe wird dadurch diagnosefähig.

Es wird möglich eine Schleifende Kupplung mit Hilfe der Getriebesteuerung zu erkennen. Die Kupplung arbeitet nicht ordnungsgemäß, wenn in der Getriebesteuerung trotz betätigter Stellmittel zum Öffnen der Kupplung der Drehmomentsensor keinen Nulldurchgang des Differenzsignals als Indikation des drehmomentfreien Zustandes der Getriebehauptwelle anzeigt. Übermäßiger Verschleiß durch schleifende, fehleingestellte Kupplungen kann hierdurch erkannt und vermieden werden.

Ausführungsbeispiele der Erfindung werden im folgenden anhand von Zeichnungen dargestellt und näher erläutert. Es zeigen:
- Fig.1: schematisch eine Anordnung zum drehmomentfreien Schalten eines Getriebes in einer typischen Anwendung bei einem Kraftfahrzeug
- Fig. 2: schematisch eine mögliche Anordnung des Drehmomentsensors zwischen Getriebegehäuse und Getriebehauptwelle
- Fig. 3: eine graphische Darstellung zur Erläuterung des der Erfindung zugrunde liegenden und an sich bekannten Meßprinzips für die Drehmomentmessung an einer Welle mittels des magnetoelastischen Effektes.

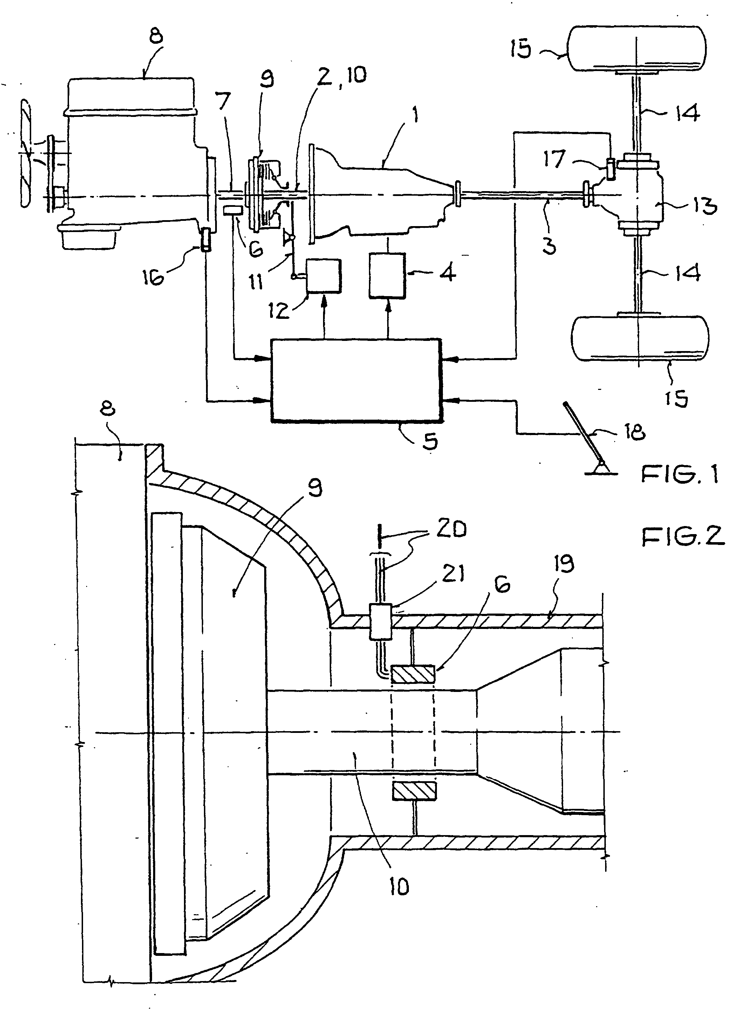

Fig. 1 zeigt schematisch ein Schaltgetriebe 1, das die Drehzahl einer eingangsseitigen Antriebswelle 2 auf eine ausgangsseitige Abtriebswelle 3 übersetzt. Das Schaltgetriebe wird mit einer ebenfalls schematisch gezeigten ansteuerbaren Getriebeschaltung 4 geschaltet. Diese Getriebeschaltung ist mit einer Getriebesteuerung 5 verbunden und wird von dieser gesteuert. Ein berührungslos arbeitender Drehmomentsensor 6, der in der Nähe der Wellenoberfläche einer Welle des Antriebsstranges angebracht ist, ist mit der Getriebesteuerung verbunden und liefert ein Meßsignal als Steuergröße an die Getriebesteuerung. In dem in Fig. 1 gezeigten Ausführungsbeispiel ist der Drehmomentsensor in der Nähe der Wellenoberfläche der Kurbelwelle 7 angeordnet. Die Kurbelwelle 7 wird von einem Verbrennungsmotor 8 angetrieben und ist mit einer Kupplung 9 von der eingangsseitigen Getriebehauptwelle 10 trennbar. Die Kupplung wird über ein Kupplungsgestänge 11, das an ein Stellglied 12 angelenkt ist, mittels dieses Stellgliedes betätigt. Als Stellglieder werden beispielsweise hydraulische Aktoren oder elektromechanische Aktoren eingesetzt. Das Stellglied ist mit der Getriebesteuerung verbunden und wird von der Getriebesteuerung gesteuert. Die Abtriebswelle 3 überträgt bei geschlossener Kupplung und eingelegtem Gang die Leistung des Verbrennungsmotors 8 über ein Differentialgetriebe 13 auf die Antriebsachse 14 und die Antriebsräder 15 des angedeuteten Kraftfahrzeuges.

Weiterhin ist die Getriebesteuerung 5 mit einem Drehzahlsensor 16, mit einem Geschwindigkeitssensor 17 und mit mit einem Gaspedalsensor 18 verbunden. Der Drehzahlsensor 16 mißt die Motordrehzahl. Der Geschwindigkeitssensor mißt die Geschwindigkeit des Kraftfahrzeugs und der Gaspedalsensor erfaßt die Position des Gaspedals und damit die vom Fahrer des Kraftfahrzeuges gewünschte Belastung des Verbrennungsmotors. Die Erfassung von Fahrzeuggeschwindigkeit, Motordrehzahl und gewünschtem Belastungszustand in der Getriebesteuerung dienen in an sich bekannter Weise der automatisierten Auswahl des dem Belastungszustand des Verbrennungsmotors am besten geeigneten Ganges in dem Schaltgetriebe. Hierzu stehen dem Fachmann eine umfangreiche Auswahl von Steuerungsalgorithmen für die Getriebesteuerung zur Verfügung.

Vorteilhaft in diesem Zusammenhang ist jedoch die hier gezeigte Kombination der bereits bekannten Anordnungen für den Gangwechsel in automatisierten Getrieben mit einem berührungslos arbeitenden Drehmomentsensor 6. Der Drehmomentsensor ermöglicht den Belastungszustand der Getriebehauptwelle zu messen. Das an die Getriebehauptwelle anliegende Drehmoment wird über die Messung der magnetischen Eigenschaften einer tordierten Welle im Antriebsstrang des Kraftfahrzeuges in Druckspannungsrichtung und in Zugspannungsrichtung bestimmt. Hierzu enthält der Drehmomentsensor eine Erregerspule und zwei Sensorspulen, jeweils eine Sensorspule für die Zugspannungsrichtung und eine Sensorspule für die Druckspannungsrichtung. Der Drehmomentsensor wird in unmittelbarer Nähe einer Wellenoberfläche im Antriebsstrang angebracht. Zur weitgehenden Unabhängigkeit des Meßsignals aus dem Drehmomentsensor von der Beschaffenheit der Wellenoberfläche wird die Erregerspule des Drehmomentsensors bevorzugt mit niedrigen Frequenzen angeregt, die tief in das Wellenmaterial eindringen. Vorzugsweise werden für die Anregung der Erregerspule Frequenzen im Bereich von 100 bis 1000 Hz eingesetzt. In einer weniger bevorzugten Ausführungsform arbeitet die Erregerspule mit Frequenzen im Bereich von 1kHz bis 10 kHz oder von 10 kHz bis 100 kHz. Zur Bestimmung des geeigneten Schaltzeitpunktes ist es wichtig den Zeitpunkt zu bestimmen, in dem kein Drehmoment an das Schaltgetriebe angelegt ist oder mit anderen Worten den Zeitpunkt zu detektieren in dem das Schaltgetriebe drehmomentfrei ist. Hierzu genügt es den Nulldurchgang des an dem Schaltgetriebe anliegenden Drehmoments zu detektieren. Eine betragsmäßige Messung des Drehmomentes in gebräuchlichen Einheiten ist hierfür nicht notwendig. So daß mit Vorteil auf eine Kalibrierung des Drehmomentsensors verzichtet werden kann. Falls in einer anderen Ausführungsform doch eine betragsmäßige Messung des Drehmomentes gewünscht ist, muß der Drehmomentsensor mit bekannten Drehmomenten kalibriert werden.

In Fig. 2 ist eine geeignete und besonders bevorzugte Anordnung des Drehmomentsensors 6 im Innern des Getriebegehäuses zwischen Getriebegehäuse 19 und Getriebehauptwelle 10 gezeigt. Das Signal des Drehmomentsensors wird mit Signalleitungen 20, die mit einer Durchführung durch die Wand des Getriebegehäuses geführt sind, an die Getriebesteuerung weitergeleitet. Der Drehmomentsensor ist in diesem Ausführungsbeispiel im Antriebsstrang nach dem Verbrennungsmotor 8 und nach der Kupplung 9 angeordnet. An dieser Stelle des Antriebsstranges zwischen Kupplung und eigentlichem Getriebe ist in der Regel genügend Raum für die Anbringung eines Drehmomentsensors vorhanden. Außerdem erlaubt das Getriebegehäuse an dieser Stelle die Durchführung elektrischer Anschlüsse für die Stromversorgung des Drehmomentsensors und das Meßsignal. Ohne große Steigerung der Kosten wird ein ruckfrei schaltendes Getriebe verwirklicht. Die Lebensdauer von Kupplung und Getriebe wird gesteigert, die Betriebskosten des Kraftfahrzeuges werden gesenkt.

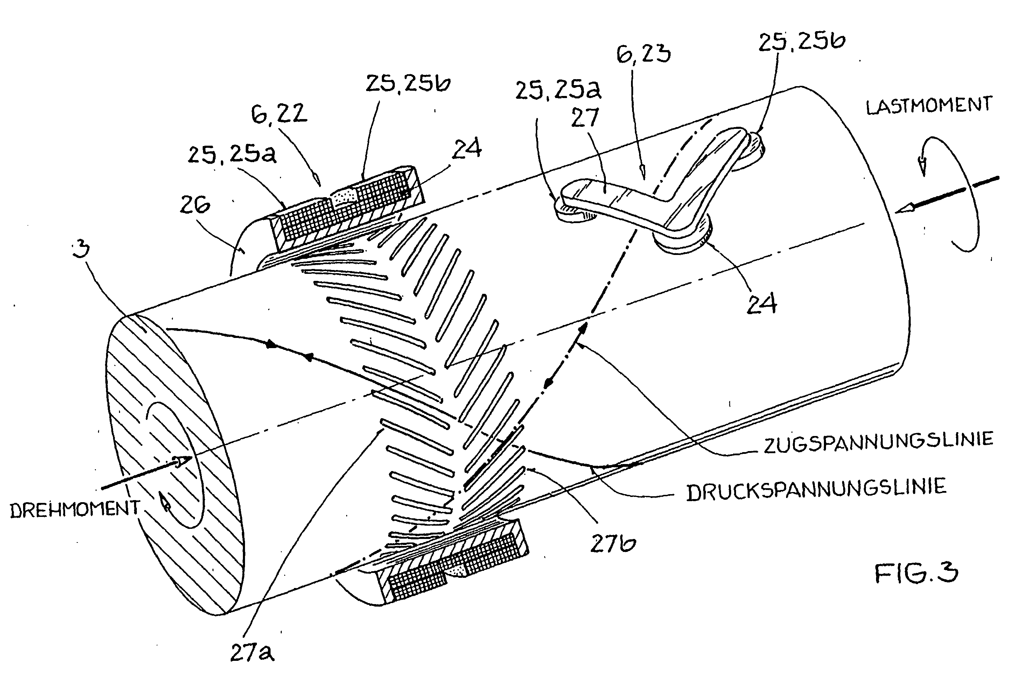

Zur weiteren Erläuterung des der Erfindung zugrunde liegenden Meßprinzips sind in Fig. 3 beispielhaft zwei mögliche Ausführungsformen für einen Drehmomentsensor zur Messung des Drehmomentes an einer tordierten Welle gezeigt. Eine Antriebswelle 3 wird an ihrem einen Ende mit einem Drehmoment beaufschlagt, das am gegenüberliegenden Wellenende eine Last antreiben soll. Hierdurch entsteht in der Welle eine Torsion, die sich in der Welle in Druckspannungen und Zugspannungen ausbildet. Die Druckspannungen sind mit einer durchgezogenen Druckspannungslinie dargestellt, während die Zugspannungen in einer strichpunktierten Zugspannungslinie dargestellt sind. Gezeigt sind zwei verschiedene Drehmomentsensoren 6, ein Ringsensor 22 und ein Jochsensor 23, die beide für die erfindungsgemäße Anordnung geeignet sind. Jeder der Drehmomentsensoren besteht aus mindestens einer Erregerspule 24 und mindestens zwei Sensorspulen 25. Mit der Erregerspule 24 wird jeweils im Inneren der Welle 3 ein magnetisches Wechselfeld erzeugt, dessen magnetische Induktion (physikalisches Formelzeichen B) mit den Sensorspulen 25,25a,25b gemessen wird. Durch die Belastung der Welle mit einem Drehmoment entsteht in der Welle eine Anisotropie, so daß aufgrund des magnetoelastischen Effektes die magnetische Induktion richtungsabhängig unterschiedliche Feldstärken hat. In Druckspannungsrichtung wird die Feldstärke der magnetischen Induktion in; belasteten Zustand der Welle einen anderen Wert haben als in Zugspannungsrichtung.

Der Ringsensor 22 umgibt die Welle 3 über ihren ganzen Umfang. Die Erregerspule 24 und die beiden Sensorspulen 25 sind auf einem Spulenträger 26 angebracht. Eine Sensorspule 25a mißt die magnetische Induktion in Druckspannungsrichtung und die andere Sensorspule 25b mißt die magnetische Induktion in Zugspannungsrichtung. Der Ringsensor hat den Vorteil, daß er die Feldstärken der magnetischen Induktion integral über den ganzen Umfang der Welle 3 mißt. Damit dieser integrale Wert über den Umfang der Welle nicht zu Null wird, ist es jedoch jeweils erforderlich an der Wellenoberfläche Flußführungsmittel vorzusehen, die jeweils eine Richtungskomponente der magnetische Feldstärke bevorzugt führen. In dem gezeigten Ausführungsbeispiel bei der gezeigten Drehrichtung führen die Flussführungsmittel 27 a die magnetischen Feldlinie in der Welle bevorzugt in Druckspannungsrichtung, während die Flußführungsmittel 27b die magnetischen Feldlinien bevorzugt in Zugspannungsrichtung führen. Die Sensorspule 25a mißt dann die Druckspannungsrichtung, während die Sensorspule 25b die Zugspannungsrichtung mißt. Die Signale der Sensorspulen 25a, 25b werden vorzugsweise in Differenzschaltung zusammengeschaltet, so daß wie bereits beschrieben der Drehmomentsensor ein Differenzsignal an die Getriebesteuerung liefert und dieses Differenzsignal ein Maß für den drehmomentfreien Zustand der Welle 3 ist. Die Flussführungsmittel sind vorzugsweise als stegförmige Erhebungen oder als längliche Riefen an der Wellenoberfläche ausgebildet. Die Flußführungsmittel können sowohl aus dem Wellenkörper selbst geformt sein als auch als getrenntes ringförmiges Bauteil auf die Welle aufgeschoben sein. Wichtig ist, daß die flußführenden Erhebungen oder Vertiefungen für die Druckspannungsrichtung 27a einerseits und die Zugspannungsrichtung 27b andererseits einen von Null verschiedenen Winkel zueinander bilden, vorzugsweise im rechten Winkel zueinander stehen, da auch Druckspannung und Zugspannung in der Welle im rechten Winkel aufeinander stehen.

Ein anderer Sensortyp der ebenfalls für die Erfindung geeignet ist, ist der Jochsensor 23, dessen V-förmig gewinkeltes, magnetisches Joch 27 eine Erregerspule 24 und zwei Sensorspulen 25a, 25b trägt. Der Jochsensor kann die beiden Richtungskomponenten des magnetischen Induktionsfeldes nur partiell und lokal an dem Teil der -Wellenoberfläche messen, die dem Sensor gegenüberliegt. Jedoch werden beim Jochsensor keine zusätzlichen Flußführungsmittel an der Wellenoberfläche benötigt. Das Joch 27 selbst ist bereits das Flußführungsmittel für die magnetischen Feldlinien. Die beiden benötigten Vorzugsrichtungen sind deshalb bereits durch die beiden Schenkel des V-förmigen Joches 27 gegeben. Der Jochsensor wird deshalb an der Wellenoberfläche bevorzugt derart ausgerichtet, daß von den Schenkeln des V-förmigen magnetischen Joches 27 jeweils ein Schenkel parallel zur Druckspannungsrichtung in der Welle und ein Schenkel parallel zur Zugspannungsrichtung in der Welle zu liegen kommt. Vorzugsweise stehen deshalb die beiden Schenkel des V-förmigen Jochs in einem rechten Winkel aufeinander. Die Sensorspule 2% mißt dann die Magnetfeldkomponente in Druckspannungsrichtung und die Sensorspule 25b mißt die Magnetfeldkomponente in Zugspannungsrichtung, jeweils bei dem in der Fig. 3 gezeigten Drehsinn der Welle. Ändert sich die Drehrichtung der Welle vertauschen sich natürlich auch die Druckspannungsrichtung und die Zugspannungsrichtung. Auch beim Jochsensor 27 sind die beiden Sensorspulen 25a, 25b vorzugsweise, mit ihren Signalen in Differenzschaltung geschaltet, so daß der Nulldurchgang des Differenzsignals den drehmomentfreien Zustand der Welle anzeigt.

## Patentansprüche

1. Anordnung zum drehmomentfreien Gangwechsel in einem Antriebsstrang mit
einem mechanischen Schaltgetriebe (1) mit mehreren Gängen, zum Wechsel des Übersetzungsverhältnisses der Drehzahlen von eingangsseitiger Antriebswelle (2) des Schaltgetriebes und ausgangsseitiger Abtriebswelle (3) des Schaltgetriebes, mit einer ansteuerbaren Gangschaltung (4) zum Betätigen des Schaltgetriebes und Einlegen der verschiedenen Gänge, mit einer Getriebesteuerung (5) zur Ansteuerung der Gangschaltung (4), mit mindestens einem induktiven Drehmomentsensor (6), der in der Nähe der Wellenoberfläche einer Welle des Antriebsstranges (2, 3) angebracht ist, und
der jeweils aus mindestens einer Erregerspule (24) zur Induktion eines magnetischen Wechselfeldes in einer der Wellen des Antriebstranges (2,3) und mindestens zwei Sensorspulen (25, 25a, 25b) besteht, von denen die eine Sensorspule (25a) das in der Welle induzierte Magnetfeld in Druckspannungsrichtung erfaßt und die andere Sensorspule (25b) das in der Welle induzierte Magnetfeld in der Zugspannungsrichtung erfaßt und bei dem die beiden Sensorspulen (25a, 25b) in Differenzschaltung geschaltet sind und ein Differenzsignal als Meßsignal des Drehmomentsensors (6) liefern, wobei
der Drehmomentsensor (6) mit der Getriebesteuerung (5) verbunden ist und das Differenzsignal der beiden Sensorspulen (25a,25b) des Drehmomentsensors (6) eine Steuergröße für die Getriebesteuerung (6) ist, und
die eingangsseitige Antriebswelle (2) des Schaltgetriebes mit einer Kupplung (9) auf die Kurbelwelle (7) eines Verbrennungsmotors (8) geschaltet ist, und
die Getriebesteuerung weiterhin mit einem Motordrehzahlsensor (16), mit einem Geschwindigkeitssensor (17), mit einem Gaspedalsensor (18) und mit einem ansteuerbaren Aktor (12) zur Betätigung der Kupplung (9) verbunden ist und die Getriebesteuerung (5) in Abhängigkeit der Signale der angeschlossenen Sensoren (16, 17, 18, 6) den Gangwechsel in dem Schaltgetriebe (1) auslöst,
**dadurch gekennzeichnet,**
**dass** die Getriebesteuerung (5) eine Fehlfunktion detektiert, wenn der Drehmomentsensor (6) trotz betätigter Kupplung (9) keinen Nulldurchgang des Differenzsignals anzeigt.

2. Anordnung nach Anspruch 1, **dadurch gekennzeichnet, daß** die Getriebesteuerung (5)
einen Nulldurchgang des Differenzsignals als möglichen Zeitpunkt für einen drehmomentfreien Gangwechsel detektiert.

## Claims

1. Arrangement for torque-free gear change in a drive train with
a mechanical gearbox (1) with several gears, for changing the transmission ratio of the speeds of input shaft (2) of the gearbox and output shaft (3) of the gearbox, with controllable gear switching (4) for activating the gearbox and engaging the different gears, with a gearbox control (5) for controlling the gear switching (4), with at least one inductive torque sensor (6) which is arranged in proximity to the upper surface of a shaft of the drive train (2, 3) and which consists of at least one field coil (24) for the induction of a magnetic alternating field in one of the shafts of the drive train (2, 3) and at least two sensor coils (25, 25a, 25b), of which one sensor coil (25a) records the magnetic field induced in the shaft in the compression stress direction and the other sensor coil (25b) records the magnetic field induced in the shaft in the tensile stress direction and wherein the two sensor coils (25a, 25b) are switched in a differentiating circuit and supply a differential signal as a measurement signal of the torque sensor (6) wherein
the torque sensor (6) is connected to the gearbox control (5) and the differential signal of the two sensor coils (25a, 25b) of the torque sensor (6) is a control value for the gearbox control (6), and
the input shaft (2) of the gearbox is switched with a coupling (9) onto the crankshaft of an internal combustion engine (8) and
the gearbox control is furthermore connected to an engine speed sensor (16), to a speed sensor (17), to an accelerator sensor (18) and to a controllable actuator (12) for the activation of the coupling (9) and the gearbox control (5) depending of the signals of the connected sensors (16, 17, 18, 6) initiates the gear change in the gearbox (1),
**characterised in that**
the gearbox control (5) detects a malfunction if the torque sensor (6) does not indicate zero passage of the differential signal in spite of activated coupling (9).

2. Arrangement according to claim 1, **characterised in that** the gearbox control (5) detects a zero passage of the differential signal as a possible time for a torque-free gear change.

## Revendications

1. Dispositif de changement de vitesses sans couple dans une chaîne cinématique, comprenant :
- une boîte de vitesses mécanique (1) à plusieurs rapports, pour le changement du rapport de transmission des vitesses de rotation de l'arbre d'entraînement (2) - côté entrée - de la boîte de vitesses et de l'arbre d'entraînement (3) - côté sortie - de la boîte de vitesses,
- une commande de changement de vitesses (4) pouvant être utilisée pour manoeuvrer la boîte de vitesses et engager les différents rapports,
- une commande de transmission (5) servant à piloter la commande de changement de vitesses (4),
- au moins un capteur de couple inductif (6) qui est placé à proximité de la surface d'un arbre de la chaîne cinématique (2, 3) et qui se compose, respectivement, d'au moins un bobinage d'excitation (24) servant à l'induction d'un champ magnétique alternatif dans l'un des arbres de la chaîne cinématique (2, 3) et d'au moins deux bobinages à capteurs (25, 25a, 25b) dont l'un des bobinages à capteurs (25a) détecte, dans la direction de contrainte de pression, le champ magnétique induit dans l'arbre, et l'autre bobinage à capteurs (25b) détecte, dans la direction de contrainte de traction, le champ magnétique induit dans l'arbre, et où les deux bobinages à capteurs (25a, 25b) sont commutés dans un circuit différentiel et fournissent un signal différentiel servant de signal de mesure du capteur de couple (6),
où le capteur de couple (6) est connecté à la commande de transmission (5), et le signal différentiel des deux bobinages à capteurs (25a, 25b) du capteur de couple (6) est une variable de commande pour la commande de transmission (5),
où l'arbre d'entraînement (2) - côté entrée - de la boîte de vitesses est commuté avec un embrayage (9) sur le vilebrequin (7) d'un moteur à combustion interne (8),
où la commande de transmission est reliée en outre à un capteur de régime (16) du moteur, à un capteur de vitesse (17), à un capteur (18) de la pédale d'accélérateur et à un actionneur (12) pouvant être commandé pour actionner l'embrayage (9), et
où la commande de transmission (5), en fonction des signaux des capteurs connectés (16, 17, 18, 6), déclenche le changement de vitesse dans la boîte de vitesses (1),
**caractérisé**
**en ce que** la commande de transmission (5) détecte un défaut de fonctionnement lorsque le capteur de couple (6), bien que l'embrayage (9) soit actionné, n'indique aucun point de passage à zéro du signal différentiel.

2. Dispositif selon la revendication 1, **caractérisé en ce que** la commande de transmission (5) détecte un point de passage à zéro du signal différentiel comme un moment possible pour un changement de vitesse sans couple.
